# EUROPÄISCHE PATENTSCHRIFT

(11) **EP 1 417 411 B1**
(45) Veröffentlichungstag und Bekanntmachung des Hinweises auf die Patenterteilung: **23.05.2007**
(21) Anmeldenummer: 02745087.3
(22) Anmeldetag: 28.05.2002
(51) Int. Cl.: F03D 9/00

(54) **WINDENERGIEANLAGE MIT MEERWASSERENTSALZUNGSANLAGE**
WIND POWER PLANT COMPRISING A SEAWATER DESALINATION SYSTEM
EOLIENNE DOTEE D'UNE INSTALLATION DE DESSALEMENT D'EAU DE MER

(30) Priorität: 30.05.2001 DE 10126222
(43) Veröffentlichungstag der Anmeldung: 12.05.2004
(73) Patentinhaber: Aerodyn Engineering GmbH, 24768 Rendsburg (DE)
(72) Erfinder: GEBEL, Joachim, 52066 Aachen (DE); SIEGFRIEDSEN, Sönke, 25878 Drage (DE); SÜLEYMAN, Yüce, 52072 Aachen (DE)
(74) Vertreter: Biehl, Christian
(86) Internationale Anmeldenummer: PCT/DE2002/001918
(87) Internationale Veröffentlichungsnummer: WO 2002/097265

(56) Entgegenhaltungen:
- EP-A- 1 182 170
- DE-A- 2 928 392
- DE-A- 3 808 536
- ES-A- 2 134 682
- FR-A- 2 531 499

## Beschreibung

Die Erfindung betrifft eine Windenergieanlage mit einem Turm, einer von diesem getragenen Gondel, wenigstens einem Rotorblatt und einer in der Gondel gelagerten Rotornabe.

Es sind Meerwasserentsalzungsanlagen bekannt, die - meist unter Nutzung von fossilen Energieträgem - Meerwasser entsalzen. Auch bei den nach dem Umkehr-Osmose-Verfahren und dem Verfahren mit Verdampfung und mechanischer Brüdenverdichtung arbeitenden, elektrisch betriebenen Anlagen wird meist unter Verwendung von fossilen Brennstoffen erzeugte elektrische Energie genutzt.

Die DE 38 08 536 A offenbart eine Windenergieanlage mit einer von dem Rotor der Windenergieanlage angetriebene Pumpe.

Aus der DE 200 13 613 U1 ist eine mit einer Wasseraufbereitungsanlage zusammenwirkende Windenergieanlage bekannt, in deren Turm ein Trinkwasserspeicherbehälter angeordnet ist. Die den Speicherbehälter mit Trinkwasser speisende Wasseraufbereitungsanlage wird mittels Elektroenergie, die in üblicher Weise in einer Windenergieanlage erzeugt wird, betrieben.

Die DE 29 28 392 C2 beschreibt eine Meerwasserentsalzungsanlage mit Brüdenverdichter, bei der die Verdampferrohre horizontal angeordnet sind. Der Brüdenverdichter wird über einen Elektromotor betrieben.

Die EP 1 182 170 A1 beschreibt eine Windenergieanlage, in deren Turm eine Wasserverdampferanlage angeordnet ist. Auch bei dieser wird die Rotationsenergie des Rotors zunächst in elektrische Energie gewandelt, die dann zum Betreiben der Wasseraufbereitungsanlage genutzt wird.

Die DE 36 13 871 C2 beschreibt ein Verfahren zum Betreiben einer Meerwasserentsalzungsanlage durch Nutzung von Windenergie. Auch bei dieser wird die Windenergie zunächst in elektrische Energie gewandelt, die dann für den Betrieb einer Dampfverdichteranlage genutzt wird.

Die bekannten zum Aufbereiten von Meerwasser ausgebildeten Windenergieanlagen haben den Nachteil, dass sie die rotatorische Energie des Rotors in elektrische Energie umwandeln und diese dann zur Wasseraufbereitung nutzen.

Dieses Vorgehen ist mit einem relativ hohen Aufwand, hohen Investitions- und Betriebskosten und einem schlechten Wirkungsgrad aufgrund der mehrmaligen Energieumwandlung verbunden.

Der Erfindung liegt die Aufgabe zugrunde, eine Windenergieanlage zu schaffen, die bei einem einfachen Aufbau mit einem hohen Wirkungsgrad Meerwasser unter Erzeugung von Trinkwasser entsalzen kann.

Erfindungsgemäß wird diese Aufgabe gelöst durch die Merkmale des Anspruchs 1, die Unteransprüche geben vorteilhafte Ausgestaltungen der Erfindung an.

Der Kern der Erfindung ist es also, den wesentlichen Teil der zur Verfügung stehenden kinematischer Energie einer Windenergieanlage direkt (also ohne zunächst elektrische Energie zu erzeugen) für den Betrieb des Brüdenverdichters einer Meerwasserentsalzungsanlage zu verwenden.

Die rotatorische Energie des Windenergieanlagenrotors wird direkt oder indirekt über ein Winkelgetriebe auf die in dem Turm der Windenergieanlage angeordneten Aggregate einer Brüdenverdichter-Anlage übertragen.

Die Erfindung macht es mögliche, die in Rotationsenergie umgewandelte translatorische Windenergie mit hohem Wirkungsgrad zur Wasserentsaliung zu nutzen, ohne daß diese zunächst in elektrische Energie umgewandelt wird.

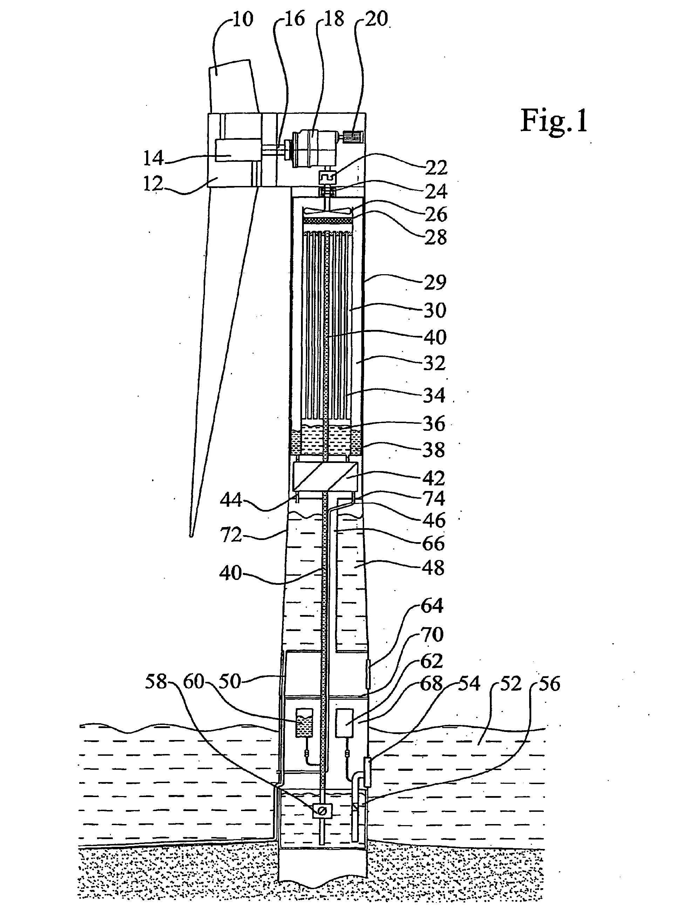

Die Erfindung wird anhand einer Zeichnung erläutert, deren einzige Figur ein Ausführungsbeispiel in einer Schnittdarstellung wiedergibt.

Die Windenergieanlage besteht aus einem Rotor, der aus - regelmäßig drei - Rotorblättern 10, einer Blattnabe 12 und einer Blattverstelleinrichtung 14 besteht. Der Rotor 10, 12, 14 ist in einer drehbar auf einem Turm 72 montierten Gondel gelagert. Die Gondel nimmt ein Winkelgetriebe 18 auf, das die von dem Rotor erzeugte, von der im wesentlichen horizontal liegenden Rotorwelle 16 herangeführte mechanische Rotationsenergie über eine Kupplung 22 auf einen in einem Lager 24 gelagerten Brüdenverdichter 26 überträgt. In der Gondel ist weiter ein über das Getriebe 18 angetriebener Generator 20 angeordnet, der - über eine nicht gezeigte - Pufferbatterie die - nicht gezeigten - Regeleinrichtungen und die Hebepumpe 58 mit elektrischer Energie versorgt.

Unterhalb des Brüdenverdichters 26 ist ein Fallfilmverdampfer 30 angeordnet, der eine Mehrzahl von senkrecht stehenden Wärmetauscherrohren 34 aufweist. Unterhalb des Fallfilmverdampfers 30 ist ein Konzentratauffangtank 36 angeordnet, der Fallfilmverdampfer 30 wird von einem Heizmantel 32 umgeben, der nach außen zu der Turmwandung hin thermisch isoliert ist und an den sich unten ein Destillatauffangtank 38 anschließt.

Unterhalb der Tanks 36, 38 ist ein Wärmetauscher 42 angeordnet, durch den einerseits ein zu dem Fallfilmverdampfer führender Meerwasserzulauf 40 und andererseits der Abfluß aus den Tanks 36, 38 geführt ist.

Unterhalb des Wärmetauschers 42 ist eine Wartungsbühne 74 angeordnet, unter dieser wiederum ein Destillattank 48; der das Destillat nach Passieren des Wärmetauschers 42 über eine Leitung 44 aufnimmt und über eine Destillatleitung 50 mit einem außerhalb des Turms angeordneten Trinkwassertank verbunden ist. Unterhalb des Wärmetauschers 42 wiederum ist eine Eingangstür 64 angeordnet, die einen Zugang auf einen Fußflansch 70 des Turms 72 erlaubt.

Das zu entsalzende Meerwasser 52 gelangt über einen Filter 54 in ein Meerwasserreservoir 56 in dem Gründungsteil 68 des Turms 72, von dem es von einer Hebepumpe 58 bis auf das Niveau des Fallfilmverdampfers 30 angehoben wird.

Ein Tank 62 dient zur Chlorierung des zu reinigenden Wassers, ein Tank 60 zum Zuführen eines Antiscalants und eines Entschäumeröls zur Verhinderung von Schaumbildung.

Bei dem Betrieb der Anlage wird das Meerwasser über den Filter 54 in das Meerwasserreservoir 56 geführt. Die Hebepumpe 58 pumpt das Wasser durch den Wasserzulauf nach oben, das Meerwasser wird zur Desinfektion gechlort, ein Antiscalant zur Verhinderung von Salzausfällungen und Entschäumung können dem Wasser zugegeben werden.

Das Meerwasser wird zur Vorwärmung durch den Wärmetauscher 42 geführt, der mit dem heißen Destillat- und Konzentratstrom aus dem Verdampfer 30 beaufschlagt ist. Das bis nahe an die Verdampfungstemperatur vorgewärmte Meerwasser wird bis auf die Höhe des Kopfes des Verdampfers 30 geführt, es fließt in den Rohren des Verdampfers 30 wieder herab. Durch die Wärme des auf der anderen Seite der Rohre des Verdampfers 30 kondensierenden Dampfes wird ein Teil des als Film herabströmenden Wassers verdampft. Dieser Dampf wird von dem Verdichter 26 angesaugt und damit auf ein höheres Druck- und damit Temperaturniveau gebracht. Der so erzeugte Dampf kann als Heizdampf genutzt werden und wird seinerseits zum Verdampfer geleitet, wo er an den Rohren kondensiert und die latente Wärme an den Flüssigkeitsfilm abgibt. Das als Kondensat anfallende Destillat wird in dem Destillatauffangtank 38 gesammelt und über den Wärmetauscher 42 in den Destillätwassertank 48 und von diesem über die Leitung 50 zu einem Trinkwasserspeicher außerhalb der Anlage geführt.

Das aufkonzentrierte Meerwasser, die Brine, wird von dem Konzentratauffangtank 36 aufgefangen, zur Abgabe seiner Wärme an das nachströmende Meerwasser durch den Wärmetauscher 42 geführt und sodann in das Meer zurückgeführt.

## Patentansprüche

1. Windenergieanlage mit einem Turm (72), einer von diesem um eine senkrechte Achse drehbar getragene Gondel und einem in der Gondel gelagerten Rotor (10, 12, 14), die mit einer Wasseraufbereitungsanlage zusammenwirkt, bei der die Wasseraufbereitungsanlage als Brüdenverdichter-Anlage mit einem in dem Turm (72) angeordneten Verdampfer (30), einem oberhalb des Verdampfers (30) angeordneten, direkt oder indirekt über einen Winkelgetriebe (18) von dem Rotor (10, 12, 14) der Windenergieanlage mechanisch angetriebenen Verdichter (26), einem unterhalb des Verdampfers (30) angeordneten Destillattank (48) und einem das zu dem Verdampfer (30) geführte Meerwasser vorwärmenden, von dem Destillat und/oder der Brine beaufschlagten Wärmetauscher (42) ausgebildet ist.

2. Windenergieanlage nach Anspruch 1, **dadurch gekennzeichnet, dass** die den Verdampfer (30) bildenden Elemente parallel zu der Achse des Turms (72) angeordnet sind.

3. Windenergieanlage nach einem der vorangehenden Ansprüche, dass der Verdampfer (30) ein Fallfilmverdampfer ist.

4. Windenergieanlage nach einem der vorangehenden Ansprüche, **gekennzeichnet durch** einen von der Rotornabe (16) angetriebenen Generator (20).

## Claims

1. Wind power plant having a tower (72), a gondola carried by the latter so as to rotate about a vertical axis and a rotor (10, 12, 14) mounted in the gondola and cooperating with a water purification system, Wherein the water purification system is constructed as a vapour compressor system with an evaporator (30) located in the tower (72), a compressor (26) mechanically driven by the rotor (10, 12, 14) of the wind power plant, either directly or indirectly by means of a mitre gear (18), and located above the evaporator (30), a distillate tank (48) positioned below the evaporator (30) and a heat exchanger (42) preheating the seawater passed to the evaporator (30) and subject to the action of the distillate and/or brine.

2. Wind power plant according to claim 1, **characterized in that** the elements forming the evaporator (30) are positioned parallel to the axis of the tower (72).

3. Wind power plant according to one of the preceding claims, **characterized in that** the evaporator (30) is a falling film evaporator.

4. Wind power plant according to one of the preceding claims, **characterized by** a generator (20) driven by the rotor hub (16).

## Revendications

1. Eolienne comprenant une tour (72), une nacelle portée par celle-ci, mobile autour d'un axe vertical, et un rotor (10, 12, 14) monté dans la nacelle, lequel coopère avec une installation de traitement d'eau, dans laquelle l'installation de traitement d'eau est conçue comme installation à compresseur de vapeur comprenant un évaporateur (30) disposé dans la tour (72), un compresseur (26) disposé au-dessus de l'évaporateur (30), entraîné mécaniquement directement ou indirectement par un renvoi d'angle (18) du rotor (10, 12, 14) de l'éolienne, un réservoir de distillat (48) disposé au-dessous de l'évaporateur (30) et un échangeur de chaleur (42) soumis au distillat et/ou à la saumure qui préchauffe l'eau de mer amenée à l'évaporateur (30).

2. Eolienne selon la revendication 1, **caractérisée en ce que** les éléments formant l'évaporateur (30) sont disposés parallèlement à l'axe de la tour (72).

3. Eolienne selon l'une des revendications précédentes, **caractérisée en ce que** l'évaporateur (30) est un évaporateur à film tombant.

4. Eolienne selon l'une des revendications précédentes, **caractérisée par** une génératrice (20) entraînée par le moyeu de rotor (16).
